(19) Europäisches Patentamt
European Patent Office
Office européen des brevets

(11) **EP 3 956 056 B1**

(12) **FASCICULE DE BREVET EUROPEEN**

(45) Date de publication et mention de la délivrance du brevet:
**12.04.2023 Bulletin 2023/15**

(21) Numéro de dépôt: **20721460.2**

(22) Date de dépôt: **16.04.2020**

(51) Classification Internationale des Brevets (IPC):
***B01J 19/32*** *(2006.01)*

(52) Classification Coopérative des Brevets (CPC):
**B01J 19/32;** B01J 2219/3221; B01J 2219/32217;
B01J 2219/3222; B01J 2219/32227;
B01J 2219/32262; B01J 2219/32408;
B01J 2219/32416; B01J 2219/32491;
B01J 2219/3281

(86) Numéro de dépôt international:
**PCT/EP2020/060646**

(87) Numéro de publication internationale:
**WO 2020/212460 (22.10.2020 Gazette 2020/43)**

(54) **GARNISSAGE ONDULÉ-CROISÉ EN MOUSSE MÉTALLIQUE**

AUS METALLSCHAUM HERGESTELLTE, KREUZGEWELLTE PACKUNG

CROSS-CORRUGATED PACKING MADE FROM METAL FOAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2019 FR 1904018**

(43) Date de publication de la demande:
**23.02.2022 Bulletin 2022/08**

(73) Titulaire: **L'AIR LIQUIDE, SOCIETE ANONYME POUR L'ETUDE ET L'EXPLOITATION DES PROCEDES GEORGES CLAUDE**
**75007 Paris (FR)**

(72) Inventeurs:
• FRIMAT, David
  **78350 LES LOGES EN JOSAS (FR)**
• GARY, Daniel
  **78350 LES LOGES EN JOSAS (FR)**
• LIX, Clément
  **75007 PARIS (FR)**
• ROUSSEAU, Frédéric
  **78350 LES LOGES EN JOSAS (FR)**
• SAULNIER, Bernard
  **78350 LES LOGES EN JOSAS (FR)**
• WATTIAU, Mikael
  **78350 LES LOGES EN JOSAS (FR)**

(74) Mandataire: **Air Liquide**
**L'Air Liquide S.A.**
**Direction de la Propriété Intellectuelle**
**75, Quai d'Orsay**
**75321 Paris Cedex 07 (FR)**

(56) Documents cités:
EP-A1- 3 263 211          WO-A2-01/94006
CN-A- 105 771 873         FR-A1- 2 675 568
FR-A1- 2 990 631          US-A1- 2015 136 582
US-A1- 2019 046 949

**Description**

La présente invention concerne un garnissage ondulé-croisé en mousse métallique, en particulier adapté au domaine des équipements de mises en contact de fluides. Il s'agit en particulier du domaine des plaques de garnissage structuré qui équipent les colonnes d'échange de matière et de chaleur. Cette invention s'applique tout spécialement aux colonnes destinées aux transferts gaz-liquide à contre-courant que sont les colonnes de distillation, d'absorption et d'épuisement.

Les garnissages structurés en feuilles ondulées-croisées constituent dans la plupart des cas la solution technique la plus efficace pour les opérations de transfert de masse gaz-liquide. Comparativement aux autres familles de contacteurs que sont les garnissages vracs et les plateaux de distillation, ils conduisent à de plus faibles pertes de charge pour une même séparation, tout en ayant une capacité et une efficacité élevées. Leurs faibles pertes de charges conduisent à un gain énergétique et donc à une réduction du coût opératoire. La capacité de gaz et l'efficacité se reflètent dans la compacité en section et en hauteur de l'équipement. Réduire les dimensions de la colonne correspond à une réduction d'investissement initial. Ces gains relatifs imputables aux garnissages structurés sont particulièrement importants dans le cas de procédés impliquant de faibles reflux liquides. C'est le cas notamment des colonnes de distillation à pression atmosphérique et plus encore pour les colonnes opérant sous vide.

Pour profiter au mieux de l'efficacité des garnissages ondulés-croisés, on peut chercher à augmenter la surface spécifique des garnissages, notamment en réduisant la hauteur des ondulations. On a alors une surface développée plus importante dans un volume donné, permettant plus d'échange et donc une hauteur de section réduite.

On parle parfois de garnissage de haute densité lorsque la surface spécifique excède 400 m2/m3.

Les garnissages structurés les plus denses atteignent jusqu'à 2100 m2/m3 en laboratoire. Il y a cependant peu de références industrielles au-delà de 1000 m2/m3. La surface spécifique $a_p$ peut se calculer à l'aide de la formule suivante :

$$a_p = \frac{4\,s}{b\,h}\,(1 - \tau)$$

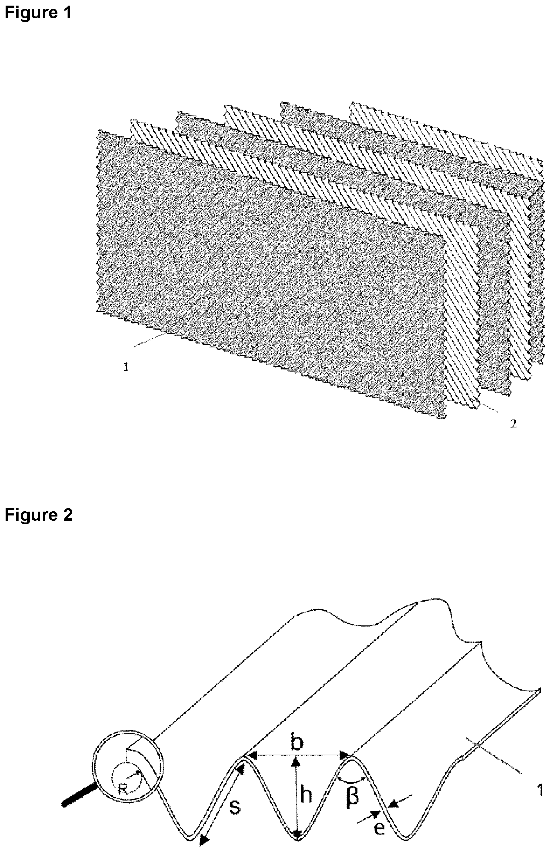

où $a_p$ est en m2/m3, s est la longueur développée du côté d'une onde, b est la longueur de la base d'une onde (pas de l'onde), h la hauteur et $\tau$ et le taux de perforations de l'onde. Les longueurs s, b et h sont représentées sur la figure 2. Les garnissages ondulés-croisés sont très sensibles aux phénomènes d'assèchement et ce d'autant plus que le film liquide est mince. Un assèchement du garnissage réduit l'aire effective de contact gaz-liquide et donc l'efficacité du garnissage. En cas de faibles débits liquides et de hautes surfaces spécifiques, on doit distribuer peu de liquide sur une grande surface de garnissage. Dans ces conditions cette distribution est relativement difficile à réaliser.

Au-delà de 500 ou 700 m2/m3, la plupart des fournisseurs ne proposent pas de garnissage en feuilles pleines pour des raisons d'assèchement. La solution généralement adoptée consiste dans l'utilisation de feuille en matériau tissé ou gaze. Un métal tissé bien dimensionné permet un meilleur étalement du liquide par capillarité sur et à travers la feuille de garnissage.

Cependant ces matériaux sont très coûteux et sont plus complexes à former avec une presse traditionnelle.

L'utilisation de feuilles en mousse permet d'obtenir des qualités de mouillage supérieures (H. Li et al. / Chemical Engineering Transactions VOL 69 (2018), H. Li et al. / Chemical Engineering Science 123 (2015) 341-349) au matériau tissé à moindre coût. Ceci explique pourquoi des garnissages structurés en mousse céramique SiC obtiennent de meilleures efficacités à faibles charges liquides (X. Li et al. / Ind. Eng. Chem. Res. 51 (2012), 915-924). CN101555138A propose une méthode de fabrication pour des feuilles ondulées en mousse céramique SiC (carbure de silicium).

Cependant, les mousses en céramique ne peuvent être formées de la même manière que les feuilles de garnissage structuré métallique.

Celles-ci sont moulées directement dans leur forme finale. Elles sont fragiles et coûteuses. De plus la taille de pore recommandée est trop élevée pour profiter des effets capillaires.

US9375655 propose d'appliquer un matériel de type mousse pour des garnissages ondulés-croisés pour la distillation de l'air dans une gamme allant de 100 m2/m3 à 500 m2/m3 avec un critère de dimensionnement complexe pour limiter la vitesse gaz afin qu'une fraction suffisante de gaz puisse passer à travers les pores de la mousse.

CN105771873 décrit un garnissage formé d'un empilement de plaques ondulées en mousse de nickel.

FR2675568 décrit un garnissage en feuillards métalliques perforés de type ondulé-croisé.

US2019/046949 décrit un garnissage en mousse métallique qui n'est pas un garnissage ondulé-croisé.

US2015/136582 décrit un garnissage ondulé croisé constitué d'un fritté métallique. WO01/94006 divulgue un garnissage à base de fibres métalliques frittées. EP3263211 et FR2990631 divulguent des mousses métalliques mais ne font pas référence aux garnissages ondulé-croisé.

Le but de l'invention est d'accroître la surface spécifique entre le gaz et le liquide en permettant le passage d'une fraction significative de gaz dans la structure tridimensionnelle de la mousse. Il suppose que toute la surface de la mousse est mouillée et en particulier la fraction de la mousse traversée par le gaz. L'expérience montre que cette dernière condition est particulièrement difficile à remplir. Le gain espéré par l'augmentation de la surface d'échange entre le gaz et le liquide dans la structure interne de la mousse est donc mis en péril. L'invention se concentre sur la mousse SiC bien que ne s'y limitant pas.

Les limites de fabrication de la mousse SiC et le critère de dimensionnement conduisent à une mousse relativement épaisse avec une épaisseur entre 0,4 à 10 mm et à une vitesse de gaz relativement faible, étant donnée la surface spécifique macroscopique du garnissage. Ceci exclut le domaine des garnissages de très hautes densités.

La présente invention a pour but de réduire significativement la hauteur des sections en garnissage structuré de haute densité des colonnes d'échanges gaz-liquide pour une performance d'échange et un débit gaz donné.

L'invention concerne plus particulièrement les fluides ayant une tension de surface inférieure à 25 mN/m, voire inférieure à 15 mN/m.

Selon un objet de l'invention, il est prévu un garnissage constitué par un empilement de lamelles ayant été façonnées pour former des ondulations dans la lamelle et assemblées pour former un bloc de garnissage pour une application de transfert de masse et/ou de chaleur, le matériau des lamelles de garnissage étant une mousse métallique caractérisé en ce que les lamelles sont assemblée pour former un bloc de garnissage ondulé croisé, le matériau des lamelles de garnissage est une mousse métallique à pores ouverts, en ce que la surface spécifique du garnissage est supérieure à 500 m$^2$/m$^3$ et en ce que l'épaisseur (e) de la lamelle est inférieure à 2 mm avant l'opération de façonnage.

Selon d'autres caractéristiques facultatives :

- la surface spécifique du garnissage est supérieure à 700 m$^2$/m$^3$.
- l'épaisseur de la lamelle avant le passage en presse est inférieure à 0,6 mm avant l'opération de pliage.
- le matériau en mousse métallique est constitué en majorité de nickel.
- le matériau en mousse métallique est constitué en majorité de cuivre.
- le matériau en mousse métallique est constitué par un alliage de type FeCrAl.
- le matériau en mousse métallique est constitué par un alliage de type NiCrFeAl.
- le matériau en mousse métallique a une densité de pores comprise entre 10 et 130 ppi (« pores per inch », pores par pouce, de préférence entre 30 et 80 ppi. Selon un autre objet de l'invention, il est prévu un procédé de séparation des gaz de l'air par distillation cryogénique dans un appareil de séparation d'air comprenant une première colonne opérant à une première pression thermiquement reliée à une deuxième colonne opérant à une deuxième pression inférieure à la première pression et éventuellement une troisième colonne reliée à la deuxième colonne par une conduite d'amenée de gaz enrichi en argon, la deuxième colonne et/ou la troisième colonne contenant un corps de garnissage composé d'un empilement de lamelles ondulées croisées pour effectuer le transfert de masse et de chaleur, les lamelles étant façonnées pour les onduler, le corps étant situé entre deux ouvertures adjacentes dans la colonne permettant l'arrivée ou le soutirage d'un fluide, la surface spécifique du garnissage étant supérieure à 500 m$^2$/m$^3$ ,

l'épaisseur de la lamelle étant inférieure à 2 mm avant l'opération de façonnage et le matériau des feuilles de garnissage est une mousse métallique à pores ouverts dans lequel on envoie un débit d'air à séparer à la première colonne, on envoie des fluides enrichis en oxygène et en azote de la première colonne à la deuxième colonne, on soutire au moins un fluide enrichi en azote de la deuxième colonne, on soutire au moins un fluide enrichi en oxygène de la deuxième colonne, on envoie le cas échéant un fluide enrichi en argon de la deuxième colonne vers la troisième colonne, la longueur parcourue par un liquide produit par séparation d'air avançant par capillarité dans la mousse pendant le temps de résidence du liquide dans le corps de garnissage étant supérieure à dix fois le pas de l'ondulation de la lamelle. De préférence, la longueur parcourue par un liquide produit par séparation d'air avançant par capillarité dans la mousse pendant le temps de résidence du liquide dans le corps de garnissage étant supérieure à quinze fois, voire vingt fois, le pas de l'ondulation de la lamelle.

De préférence, le garnissage en mousse métallique est utilisé dans une section de colonne d'échange de matières gaz-liquide, où le reflux liquide est inférieur à 20 m$^3$/h/m$^2$, de préférence inférieur à 10 m$^3$/h/m$^2$.

A cet effet, la présente invention a pour objet un garnissage en feuilles ondulées-croisées pour une application de transfert de masse et/ou de chaleur, caractérisé en ce que :

- le matériau des feuilles de garnissage est une mousse métallique à pores ouverts,
- l'aire spécifique du garnissage est supérieure à 500 m$^2$/m$^3$, de préférence supérieure à 700 m$^2$/m$^3$,
- l'épaisseur de feuille est inférieure à 2 mm, de préférence inférieure à 0,6 mm avant passage en presse.

Un tel matériau utilisé dans des garnissages à haute densité permet de favoriser l'étalement du liquide sur les feuilles grâce aux effets capillaires induits par la porosité. L'attraction du liquide dans le matériau permet de réduire les phénomènes d'assèchement, augmente ainsi la surface effective de contact entre les phases et conduit à une meilleure efficacité des garnissages à haute densité soumis à des faibles reflux liquides.

Les effets du matériau seront d'autant plus prégnants que la surface spécifique du garnissage sera élevée. Il est donc particulièrement recommandable pour les très hautes densités, notamment supérieures à 700 m$^2$/m$^3$.

L'épaisseur résultante en sortie de presse, après façonnage de l'onde, est inférieure à l'épaisseur initiale. Elle est typiquement inférieure à 0,5 mm. L'épaisseur de feuille avant le façonnage dans la presse est inférieure à 2 mm, de préférence inférieure à 0,6 mm.

Cette faible épaisseur permet de bénéficier de l'effet d'étalement capillaire de la surface poreuse sans affecter négativement le taux de vide qui correspond au passage du gaz. En effet, une large épaisseur de matériau poreux une fois saturée de liquide est un volume mort pour l'échange gaz-liquide.

De plus, la diffusion de matière au sein du liquide est majorée si le milieu du liquide est un milieu poreux. Ceci pénalise le transfert de matière au sein du liquide ce qui contribue à minorer l'efficacité du garnissage.

Les essais ont montré que les mousses métalliques bien dimensionnées et adaptées aux caractéristiques du fluide employé ont un effet d'étalement supérieur à celui du métal tissé et cela avec un coût inférieur et un pliage par presse plus aisé. La mousse peut être en alliages de fer, de cuivre, d'aluminium ou de nickel. Cette large gamme de matériaux permet de s'adapter aux compatibilités des produits. Par exemple, le nickel et le cuivre sont préférés dans le cas d'une distillation avec une haute concentration en oxygène.

Dans ces dimensions et avec des faibles reflux liquide notamment inférieurs à 20 m$^3$/m$^2$/h voire à 10 m$^3$/m$^2$/h, les conditions hydrauliques permettent une utilisation optimale des caractéristiques de la mousse en termes de mouillage. Les aspérités dues à la forme complexe de la mousse permettent d'augmenter la surface effective de contact entre phases.

Le transfert est amélioré par une utilisation optimale de la grande surface d'échange du garnissage à très haute densité. Cet avantage est perdu à haute charge liquide où le liquide noie ces aspérités et où le phénomène d'assèchement est très faible même pour une feuille lisse. Le bénéfice de cette invention est maximal pour les faibles débits liquides, les hautes surfaces spécifiques et les fluides mouillants.

Le calcul d'une épaisseur de Nusselt δ du film liquide sur le garnissage nous permet d'obtenir une vitesse effective du liquide par écoulement gravitaire :

$$\delta = \left( \frac{3\,\mu_L\,u_{Ls}}{\rho_L\,g\,a_p\,\sin\alpha_L} \right)^{1/3}$$

$$u_{Le} = \frac{u_{Ls}}{\varepsilon\,a_p\,\delta\,\sin\alpha_L}$$

On peut alors estimer le temps de résidence du liquide dans le module :

$$t_{res\,L} = {h_{pack}}\big/{u_{Le}}$$

Plus les pores sont petits, plus la force capillaire est grande mais au-delà d'une certaine densité de pores, les frottements visqueux conduisent à un optimum de vitesse d'étalement. La densité de pores des mousses métalliques est généralement comprise entre 10 et 130 ppi (« pores per inch » ou « pores par pouce » ceci étant l'unité internationale utilisée dans le domaine). On peut estimer la longueur parcourue par capillarité pendant un temps donné par la formule suivante :

$$l_{cap} = \sqrt{\frac{\sigma_L \; r_{pore} \; t_{res \, L}}{\mu_L}}$$

Cette formule nous permet de dimensionner la mousse de telle sorte que l'étalement par capillarité soit maximal étant données les caractéristiques du fluide, de la mousse et de la géométrie du garnissage. Le gain volumique devient remarquable quand la valeur de $l_{cap}$ est supérieure à 10 fois le pas d'ondes b. Dans ces conditions, le garnissage décrit par la présente invention permet de réduire considérablement le volume d'une section de colonne pour une capacité et une pureté données.

Ces performances sont mêmes supérieures à celles des garnissages de métal tissé, grâce à la structure tridimensionnelle de la mousse avec un coût réduit.

La figure 1 schématise la géométrie typique des garnissages ondulés-croisés.

La figure 2 indique les différents paramètres géométriques d'une onde de garnissage ondulé-croisé.

La figure 3 représente la structure de matériau en métal tissé et en mousse métallique.

La figure 4 représente l'invention décrite ci-dessous par le biais d'un exemple d'utilisation dans un procédé de séparation des gaz de l'air par distillation. Celui-ci est représenté à l'aide d'un schéma simplifié en figure 4.

## Description de modes de réalisation

La Figure 1 illustre une partie d'un module de garnissages constitué par un empilement de lamelles ondulées 1,2 orientées de sorte que les ondulations se croisent d'une lamelle à l'autre. Chaque lamelle est identique et l'empilement est construit en retournant une lamelle sur deux. Les ondulations illustrées dans la Figure 2 ont un pas b, une hauteur h, une épaisseur e, une longueur développée de côté d'onde s et un angle de pli entre deux côtés d'une onde β.

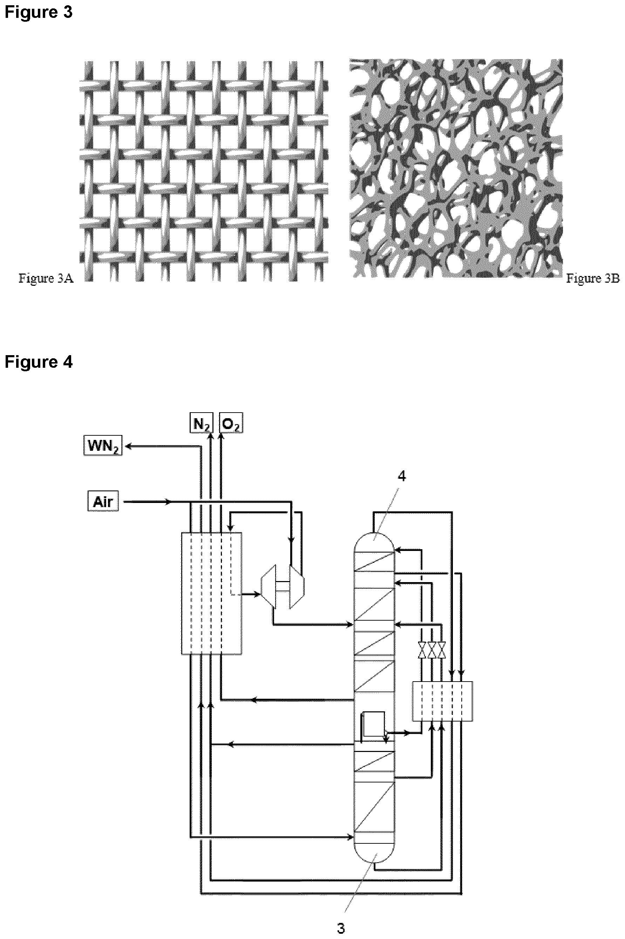

Selon l'art antérieur, les lamelles sont en aluminium perforé ou en gaze (Figure 3A). Selon la présente invention, les lamelles sont en mousse métallique (Figure 3B) ayant des pores ouverts. La surface spécifique est supérieure à 500 $m^2/m^3$, de préférence supérieure à 700 $m^2/m^3$.

L'épaisseur e de la lamelle avant le passage en presse est inférieure à 2 mm, de préférence inférieure à 0.6 mm avant passage en presse pour former la lamelle pliée.

Le matériau en mousse métallique peut être constitué en majorité de nickel ou en majorité de cuivre.

Le matériau en mousse métallique peut être constitué par un alliage de type FeCrAl ou par un alliage de type NiCrFeAl.

Le matériau en mousse métallique a une densité de pores comprise entre 10 et 130 ppi, de préférence entre 30 et 80 ppi.

Une application industrielle de ce garnissage est la séparation des gaz de l'air par distillation cryogénique. Le procédé est schématisé en figure 4. Un débit d'air entre dans l'échangeur principal à une pression voisine de 6 bar. Il a été préalablement épuré de l'eau et du gaz carbonique qu'il contenait dans l'atmosphère.

Il est refroidi à contre-courant par les produits sortant de la distillation cryogénique. Un système plus ou moins complexe de compresseurs et de turbines pourvoit un appoint de froid. Celui-ci compense les pertes de frigories par l'écart de température au bout froid de l'échangeur, les entrées thermiques et l'éventuelle production de liquide. Cette dernière n'est pas représentée sur le schéma.

L'air refroidi à son point de rosée entre alors dans une première colonne de distillation 3 à moyenne pression où a lieu une rectification qui produit en tête un débit d'azote gazeux à moyenne pression. En cuve, un liquide enrichi en oxygène est sorti pour être distillé dans une deuxième colonne à basse pression 4, c'est-à-dire proche de la pression atmosphérique.

Dans cette deuxième colonne d'épuisement 4, le liquide est encore enrichi en oxygène pour atteindre une pureté commerciale en cuve. De cette deuxième colonne 4 peut être extrait un débit d'un mélange d'oxygène et d'argon qui est alors distillé dans deux ou trois colonnes successives pour obtenir de l'argon à une pureté commerciale. Ces colonnes ne sont pas représentées sur le schéma.

Pour obtenir un reflux liquide dans la colonne à moyenne pression 3, l'azote est condensé dans un échangeur de chaleur. De manière analogue pour obtenir un gaz ascendant dans la colonne basse pression 4, l'oxygène est vaporisé également dans un échangeur de chaleur. En pratique, il s'agit d'un même échangeur de chaleur qui d'un côté condense l'azote liquide et de l'autre vaporise l'oxygène liquide. C'est pour que cela soit possible thermodynamiquement que la première colonne 3 est à moyenne pression où la température de liquéfaction de l'azote est légèrement supérieure à la température d'ébullition de l'oxygène à pression atmosphérique.

Pour augmenter le taux d'extraction d'azote, on ajoute parfois un reflux d'azote liquide depuis la tête de la colonne moyenne pression 3 dans la colonne basse pression 4, pour produire en tête un peu plus d'azote. On ajoute aussi généralement un ou deux reflux liquide à une hauteur intermédiaire pour optimiser les profils des débits dans les colonnes et augmenter l'efficacité globale du procédé.

Les conditions hydrauliques de la colonne basse pression 4 impliquent des reflux liquides relativement faibles, typiquement inférieur à 25 m³/h/m² en cuve et jusqu'à moins de 10 m³/h/m² en tête. Les garnissages utilisés sont relativement denses, d'une surface spécifique pouvant excéder 500 m²/m³.

Dans ces conditions sans modification majeure du système de confection du garnissage, on peut remplacer le matériau généralement en feuilles d'aluminium perforées par des lamelles ondulées en mousse métallique. En cuve de colonne basse pression 4, on obtient une valeur de longueur parcourue par capillarité $l_{cap}$ de 135mm, pour un liquide, soit 15 fois la valeur du pas b de l'onde. Les tests expérimentaux montrent qu'à capacité de traitement inchangée, la réduction de hauteur des sections garnies, c'est-à-dire la hauteur d'une lamelle 1,2, peut excéder 15%.

Les colonnes argon ont également des reflux liquides faibles, de l'ordre de 15 m³/h/m² et en général des garnissages très denses, notamment d'une surface spécifique supérieure à 700 m²/m³. De la même manière que pour la colonne basse pression, on peut utiliser un garnissage en mousse métallique. On obtient une valeur pour $l_{cap}$ de 126mm, soit 20 fois la valeur de la base b de l'onde. Dans ces densités élevées, la réduction de hauteur peut excéder 25% sans altérer la capacité de traitement.

Les gains volumiques attendus en utilisant la présente invention sont d'autant plus importants que le garnissage aura une densité importante. L'effet d'étalement promu par la mousse métallique est d'autant plus significatif que la surface à irriguée est grande.

L'oxygène liquide a une tension de surface inférieure à 13,2 mN/m, l'argon liquide inférieure à 12,6 mN/m et l'azote liquide à 8.9 mN/m à pression atmosphérique. La tension décroît avec la pression : à 5 bar, les valeurs de tension pour les mêmes liquides sont 8,7, 8,1 et 5,3 mN/m.

**[Tableau 1]**

**Nomenclature**

| Symbole | Unité | Description | Symbole | Unité | Description |
|---|---|---|---|---|---|
| $a_p$ | m²/m³ | Surface spécifique | $\alpha_L$ | ° | Angle de plus grande pente du garnissage avec l'horizontale |
| b | m | Pas. base d'une onde | $\beta$ | ° | Angle de pliage de l'onde |
| e | m | Épaisseur de feuille | $\delta$ | m | Épaisseur de film de Nusselt |
| g | m/s² | Accélération gravitationnelle | $\varepsilon$ | | Taux de vide du garnissage |
| h | m | Hauteur d'onde | $\mu_L$ | Pa.s | Viscosité liquide Masse |
| $h_{pack}$ | m | Hauteur d'un pack de garnissage | $\rho_L$ | kg/m³ | volumique du liquide |
| $l_{cap}$ | m | Longueur parcourue par capillarité | $\sigma_L$ | N/m | Tension de surface du liquide |
| $r_{pore}$ | m | Rayon du pore moyen | $\tau$ | | Taux de perforation feuille |
| s | m | Longueur développée du côté de l'onde | | | |
| $t_{res\,L}$ | s | Temps de résidence du liquide | | | |
| $u_{Le}$ | m/s | Vitesse liquide effective | | | |
| $u_{Ls}$ | m/s ou m³/h/m² | Vitesse liquide superficielle | | | |

**Revendications**

**1.** Garnissage constitué par un empilement de lamelles (1,2), ayant été façonnées pour former des ondulations dans la lamelle et assemblées pour former un bloc de garnissage pour une application de transfert de masse et/ou de chaleur, le matériau des lamelles de garnissage étant une mousse métallique **caractérisé en ce que** les lamelles sont assemblée pour former un bloc de garnissage ondulé croisé, le matériau des lamelles de garnissage est une mousse métallique à pores ouverts, **en ce que** la surface spécifique du garnissage est supérieure à 500 m²/m³ et **en ce que** l'épaisseur (e) de la lamelle est inférieure à 2 mm avant l'opération de façonnage.

**2.** Garnissage selon la revendication 1 dans lequel la surface spécifique du garnissage est supérieure à 700 $m^2/m^3$.

**3.** Garnissage selon la revendication 1 ou 2 dans lequel l'épaisseur de la lamelle (1,2) avant le passage en presse est inférieure à 0.6 mm avant l'opération de pliage.

**4.** Garnissage selon la revendication 1, 2 ou 3, **caractérisé en ce que** le matériau en mousse métallique est constitué en majorité de nickel.

**5.** Garnissage selon la revendication 1, 2 ou 3, **caractérisé en ce que** le matériau en mousse métallique est constitué en majorité de cuivre.

**6.** Garnissage selon la revendication 1, 2 ou 3, **caractérisé en ce que** le matériau en mousse métallique est constitué par un alliage de type FeCrAl.

**7.** Garnissage selon la revendication 1, 2 ou 3, **caractérisé en ce que** le matériau en mousse métallique est constitué par un alliage de type NiCrFeAl.

**8.** Garnissage selon l'une des revendications précédentes, caractérisé en que le matériau en mousse métallique a une densité de pores comprise entre 10 et 130 ppi, de préférence entre 30 et 80 ppi.

**9.** Procédé de séparation des gaz de l'air par distillation cryogénique dans un appareil de séparation d'air comprenant une première colonne (3) opérant à une première pression thermiquement reliée à une deuxième colonne (4) opérant à une deuxième pression inférieure à la première pression et éventuellement une troisième colonne reliée à la deuxième colonne par une conduite d'amenée de gaz enrichi en argon, la deuxième colonne et/ou la troisième colonne contenant un corps de garnissage selon l'une des revendications précédentes, composé d'un empilement de lamelles ondulées croisées (1,2) pour effectuer le transfert de masse et de chaleur, les lamelles étant façonnées pour les onduler, le corps étant situé entre deux ouvertures adjacentes dans la colonne permettant l'arrivée ou le soutirage d'un fluide, la surface spécifique du garnissage étant supérieure à 500 $m^2/m^3$ , l'épaisseur de la lamelle étant inférieure à 2 mm avant l'opération de façonnage, le matériau des feuilles de garnissage est une mousse métallique à pores ouverts dans lequel on envoie un débit d'air à séparer à la première colonne, on envoie des fluides enrichis en oxygène et en azote de la première colonne à la deuxième colonne, on soutire au moins un fluide enrichi en azote de la deuxième colonne, on soutire au moins un fluide enrichi en oxygène de la deuxième colonne, on envoie le cas échéant un fluide enrichi en argon de la deuxième colonne vers la troisième colonne, la longueur parcourue par un liquide produit par séparation d'air avançant par capillarité dans la mousse pendant le temps de résidence du liquide dans le corps de garnissage étant supérieure à dix fois le pas (b) de l'ondulation de la lamelle.

**10.** Procédé selon la revendication 9 où le garnissage en mousse métallique est utilisé dans une section de colonne d'échange de matières gaz-liquide (4), où le reflux liquide est inférieur à 20 $m^3/h/m^2$.

**11.** Procédé selon la revendication 10 où le garnissage en mousse métallique est utilisé dans une section de colonne d'échange de matières gaz-liquide (4), où le reflux liquide est inférieur à 10 $m^3/h/m^2$.

**12.** Procédé selon la revendication 9, 10 ou 11 dans lequel la longueur parcourue par un liquide produit par la séparation d'air avançant par capillarité dans la mousse pendant le temps de résidence du liquide dans le corps de garnissage est supérieure à quinze fois le pas (b) de l'ondulation de la lamelle (1,2).

**13.** Procédé selon la revendication 12 dans lequel la longueur parcourue par un liquide produit par la séparation d'air avançant par capillarité dans la mousse pendant le temps de résidence du liquide dans le corps de garnissage est supérieure à vingt fois le pas (b) de l'ondulation de la lamelle (1,2).

**Patentansprüche**

**1.** Aus einem Stapel von Lamellen (1, 2) bestehende Packung, die so gestaltet wurden, dass sie Wellen in der Lamelle bilden, und so zusammengesetzt wurden, dass sie einen Packungsblock für eine Masse- und/oder Wärmeübertragungsanwendung bilden, wobei das Material der Packungslamellen ein Metallschaum ist, **dadurch gekennzeichnet, dass** die Lamellen so zusammengesetzt sind, dass sie einen über Kreuz gewellten Packungsblock bilden, wobei das Material der Packungslamellen ein offenporiger Metallschaum ist, dadurch, dass die spezifische Oberfläche der Packung über 500 m$^2$/m$^3$ beträgt und dadurch, dass die Dicke (e) der Lamelle vor dem Formvorgang unter 2 mm beträgt.

2.  Packung nach Anspruch 1, wobei die spezifische Oberfläche der Packung über 700 m$^2$/m$^3$ beträgt.

3.  Packung nach Anspruch 1 oder 2, wobei die Dicke der Lamelle (1, 2) vor der Überführung in die Presse unter 0,6 mm vor dem Biegevorgang beträgt.

4.  Packung nach Anspruch 1, 2 oder 3, **dadurch gekennzeichnet, dass** das Metallschaummaterial hauptsächlich aus Nickel besteht.

5.  Packung nach Anspruch 1, 2 oder 3, **dadurch gekennzeichnet, dass** das Metallschaummaterial hauptsächlich aus Kupfer besteht.

6.  Packung nach Anspruch 1, 2 oder 3, **dadurch gekennzeichnet, dass** das Metallschaummaterial aus einer Legierung vom Typ FeCrAl besteht.

7.  Packung nach Anspruch 1, 2 oder 3, **dadurch gekennzeichnet, dass** das Metallschaummaterial hauptsächlich aus einer Legierung vom Typ NiCrFeAl besteht.

8.  Packung nach einem der vorhergehenden Ansprüche, **dadurch gekennzeichnet, dass** das Metallschaummaterial eine Porendichte zwischen 10 und 130 ppi, vorzugsweise zwischen 30 und 80 ppi aufweist.

9.  Verfahren zur Trennung von Gasen aus Luft mittels kryogener Destillation in einer Lufttrennvorrichtung mit einer ersten Kolonne (3), die bei einem ersten Druck arbeitet und thermisch mit einer zweiten Kolonne (4) verbunden ist, die bei einem zweiten Druck arbeitet, der geringer ist als der erste Druck, und gegebenenfalls einer dritten Kolonne, die mit der zweiten Kolonne über eine Zuleitung für mit Argon angereichertem Gas verbunden ist, wobei die zweite Kolonne und/oder die dritte Kolonne einen Packungskörper nach einem der vorhergehenden Ansprüche enthält, der aus einem Stapel von über Kreuz gewellten Lamellen (1, 2) zum Bewirken der Masse- und Wärmeübertragung aufgebaut ist, wobei die Lamellen geformt sind, damit sie gewellt sind, wobei sich der Körper zwischen zwei benachbarten Öffnungen in der Kolonne befindet, die das Zuleiten oder Abführen eines Fluids ermöglichen, wobei die spezifische Oberfläche der Packung über 500 m$^2$/m$^3$ beträgt, wobei die Dicke der Lamelle vor dem Formvorgang unter 2 mm beträgt, das Material der Packungsfolien ein offenporiger Metallschaum ist, wobei ein zu trennender Luftstrom in die erste Kolonne geleitet wird, mit Sauerstoff und Stickstoff angereicherte Fluide aus der ersten Kolonne in die zweite Kolonne geleitet werden, aus der zweiten Kolonne mindestens ein mit Sauerstoff angereichertes Fluid entnommen wird, gegebenenfalls ein mit Argon angereichertes Fluid aus der zweiten Kolonne in die dritte Kolonne geleitet wird, die Strecke, die von einer durch Lufttrennung erzeugten Flüssigkeit während der Verweildauer der Flüssigkeit im Packungskörper über Kapillarwirkung in dem Schaum zurückgelegt wird, über das Zehnfache der Steigung (b) der Welle der Lamelle beträgt.

10.  Verfahren nach Anspruch 9, wobei die Packung aus Metallschaum in einem Kolonnenabschnitt zum Gas-Flüssigkeits-Stoffaustausch (4) verwendet wird, wobei der Flüssigkeitsrückfluss unter 20 m$^3$/h/m$^2$ beträgt.

11.  Verfahren nach Anspruch 10, wobei die Packung aus Metallschaum in einem Kolonnenabschnitt zum Gas-Flüssigkeits-Stoffaustausch (4) verwendet wird, wobei der Flüssigkeitsrückfluss unter 10 m$^3$/h/m$^2$ beträgt.

12.  Verfahren nach Anspruch 9, 10 oder 11, wobei die Strecke, die von einer durch Lufttrennung erzeugten Flüssigkeit während der Verweildauer der Flüssigkeit im Packungskörper über Kapillarwirkung in dem Schaum zurückgelegt wird, über das Fünfzehnfache der Steigung (b) der Welle der Lamelle (1, 2) beträgt.

13.  Verfahren nach Anspruch 12, wobei die Strecke, die von einer durch Lufttrennung erzeugten Flüssigkeit während der Verweildauer der Flüssigkeit im Packungskörper über Kapillarwirkung in dem Schaum zurückgelegt wird, über das Fünfzehnfache der Steigung (b) der Welle der Lamelle (1, 2) beträgt.

**Claims**

1.  Packing made from a stack of leaves (1, 2) having been shaped to form corrugations in the leaf and assembled to form a pack of packing for a mass and/or heat transfer application, the material of the packing leaves being a metal foam, **characterized in that** the leaves are assembled to form a cross-corrugated pack of packing, the material of the packing leaves is an open-pore metal foam, **in that** the specific surface area of the packing is greater than 500 $m^2/m^3$, and **in that** the thickness (e) of the leaf is less than 2 mm before the shaping operation.

2. Packing according to Claim 1, wherein the specific surface area of the packing is greater than 700 $m^2/m^3$.

3. Packing according to Claim 1 or 2, wherein the thickness of the leaf (1, 2) before it enters the press is less than 0.6 mm before the bending operation.

4. Packing according to Claim 1, 2 or 3, **characterized in that** the metal foam material consists predominantly of nickel.

5. Packing according to Claim 1, 2 or 3, **characterized in that** the metal foam material consists predominantly of copper.

6. Packing according to Claim 1, 2 or 3, **characterized in that** the metal foam material consists of an alloy of FeCrAl type.

7. Packing according to Claim 1, 2 or 3, **characterized in that** the metal foam material consists of an alloy of NiCrFeAl type.

8. Packing according to one of the preceding claims, **characterized in that** the metal foam material has a pore density of between 10 and 130 ppi, preferably between 30 and 80 ppi.

9. Process for separating the air gases by cryogenic distillation in an air separation unit comprising a first column (3) operating at a first pressure thermally connected to a second column (4) operating at a second pressure lower than the first pressure and possibly a third column connected to the second column by a pipe conveying argon-enriched gas, the second column and/or the third column containing a packing body according to one of the preceding claims, made up of a stack of cross-corrugated leaves (1, 2) for performing the mass and heat transfer, the leaves being shaped in order to corrugate them, the body being situated between two adjacent openings in the column that allow a fluid to be admitted or withdrawn, the specific surface area of the packing being greater than 500 $m^2/m^3$, the thickness of the leaf being less than 2 mm before the shaping operation, the material of the packing sheets is an open-pore metal foam, wherein a flow of air that is to be separated is sent to the first column, oxygen-enriched and nitrogen-enriched fluids are sent from the first column to the second column, at least one nitrogen-enriched fluid is withdrawn from the second column, at least one oxygen-enriched fluid is withdrawn from the second column, where applicable, an argon-enriched fluid is sent from the second column to the third column, the length traveled by a liquid produced by air separation progressing by capillary action through the foam during the residence time for which the liquid resides in the packing body being greater than ten times the pitch (b) of the corrugation of the leaf.

10. Process according to Claim 9, where the metal foam packing is used in a gas-liquid material exchange column section (4), where the liquid reflux is less than 20 $m^3/h/m^2$.

11. Process according to Claim 10, where the metal foam packing is used in a gas-liquid material exchange column section (4), where the liquid reflux is less than 10 $m^3/h/m^2$.

12. Process according to Claim 9, 10 or 11, wherein the length traveled by a liquid produced by air separation progressing by capillary action through the foam during the residence time for which the liquid resides in the packing body is greater than fifteen times the pitch (b) of the corrugation of the leaf (1, 2).

13. Process according to Claim 12, wherein the length traveled by a liquid produced by air separation progressing by capillary action through the foam during the residence time for which the liquid resides in the packing body is greater than twenty times the pitch (b) of the corrugation of the leaf (1, 2).

**Figure 1**

**Figure 2**

## Figure 3

Figure 3A

Figure 3B

## Figure 4

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 101555138 A
- US 9375655 B
- CN 105771873
- FR 2675568
- US 2019046949 A
- US 2015136582 A
- WO 0194006 A
- EP 3263211 A
- FR 2990631

**Littérature non-brevet citée dans la description**

- **H. LI et al.** *Chemical Engineering Transactions,* 2018, vol. 69
- **H. LI et al.** *Chemical Engineering Science,* 2015, vol. 123, 341-349
- **X. LI et al.** *Ind. Eng. Chem. Res.,* 2012, vol. 51, 915-924